# EUROPEAN PATENT SPECIFICATION

(11) **EP 3 543 456 B1**
(45) Date of publication and mention of the grant of the patent: **25.11.2020**
(21) Application number: 19174233.7
(22) Date of filing: 07.11.2011
(51) Int. Cl.: E21B 43/12, E21B 34/06

(54) **FLUID DISCRIMINATION FOR USE WITH A SUBTERRANEAN WELL**
FLÜSSIGKEITSUNTERSCHEIDUNG ZUR VERWENDUNG IN EINER UNTERIRDISCHEN BOHRUNG
DISCRIMINATION DE FLUIDE À METTRE EN OEUVRE DANS UN PUITS SOUTERRAIN

(43) Date of publication of application: 25.09.2019
(62) Divisional of application: 17176282.6
(73) Proprietor: Halliburton Energy Services, Inc., Houston, TX 77032 (US)
(72) Inventor: DYKSTRA, Jason, D., Carrollton Texas 75006 (US); FRIPP, Michael, L., Carrollton Texas 75006 (US)
(74) Representative: Bennett, Adrian Robert J.

(56) References cited:
- WO-A1-2008/004875
- GB-A- 2 448 018
- US-A- 3 754 576
- US-A- 5 158 579
- US-A1- 2011 214 876
- US-B1- 6 402 820

## Description

### TECHNICAL FIELD

This disclosure relates generally to equipment utilized and operations performed in conjunction with a subterranean well and, in an example described herein, more particularly provides for fluid discrimination with well fluids.

### BACKGROUND

Among the many reasons for discriminating between fluids are included: a) fluid separation, b) control of produced fluids, c) control over the origin of produced fluids, d) prevention of formation damage, e) conformance, f) control of injected fluids, g) control over which zones receive injected fluids, h) prevention of gas or water coning, i) stimulation, etc. Therefore, it will be appreciated that improvements in the art are continually needed. US 2011/0214876 relates to a system for variably resisting flow of a fluid composition. US 3754576 relates to a fluid amplifier having a pair comprising a pivotable triangular flap member.

### SUMMARY

In this disclosure, systems and methods are provided which bring improvements to the art of discriminating between fluids in conjunction with well operations.

According to a first aspect of the invention, there is provided a fluid discriminator for use with a subterranean well. The fluid discriminator comprises: a structure which displaces in response to a flow of a fluid composition, whereby an outlet flow path of a majority of the fluid composition changes in response to a change in a ratio of fluids in the fluid composition; characterised in that the fluid discriminator further comprises a fluid switch which directs the flow of the fluid composition to at least first and second inlet flow paths wherein the fluid switch comprises a blocking device which at least partially blocks the flow of the fluid composition through at least one of the first and second inlet flow paths, and further wherein the fluid switch directs the flow of the fluid composition toward one of the first and second inlet flow paths in response to the blocking device increasingly blocking the other of the first and second inlet flow paths in response to the flow of the fluid composition.

The invention further relates to a fluid discrimination system for use with a subterranean well. The system comprises a fluid discriminator according to the first aspect of the invention, which selects through which of multiple outlet flow paths a fluid composition flows, the selection being based on at least one direction of flow of the fluid composition through the fluid discriminator, and the direction being dependent on at least one fluid type in the fluid composition, wherein the at least one direction comprises first and second directions, and wherein the fluid discriminator selects a first outlet flow path in response to flow of the fluid composition more in the first direction, and wherein the fluid discriminator selects a second outlet flow path in response to flow of the fluid composition more in the second direction and wherein the flow of the fluid composition in the first direction impinges on a structure, whereby the structure displaces and the first outlet flow path is selected.

The invention also relates to a method of discriminating between fluids flowed in a subterranean well. The method comprises: providing a fluid discriminator according to the first aspect of the invention, which selects through which of multiple outlet flow paths a fluid composition flows in the well, the selection being based on at least one direction of flow of the fluid composition through the fluid discriminator, and the direction being dependent on a ratio of the fluids in the fluid composition, and wherein the at least one direction comprises first and second directions, and wherein the fluid discriminator selects a first outlet flow path in response to flow of the fluid composition more in the first direction, and wherein the fluid discriminator selects a second outlet flow path in response to flow of the fluid composition more in the second direction.

An example is described below in which a fluid composition is routed to different outlet flow paths by a fluid discriminator, depending on properties, characteristics, etc. of the fluid composition.

These and other features, advantages and benefits will become apparent to one of ordinary skill in the art upon careful consideration of the detailed description of representative examples of the disclosure below and the accompanying drawings, in which similar elements are indicated in the various figures using the same reference numbers.

### BRIEF DESCRIPTION OF THE DRAWINGS

FIG. 1 is a representative partially cross-sectional view of a system and associated method.
FIG. 2 is a representative cross-sectional view of a fluid discrimination system.
FIG. 3 is a representative cross-sectional view of the fluid discrimination system, taken along line 3-3 of FIG. 2.
FIG. 4 is a representative cross-sectional view of a fluid discriminator.
FIGS. 5 & 6 are representative cross-sectional views of the fluid discriminator, taken along line 5-5 of FIG. 4, a fluid composition being directed to different outlet flow paths in FIGS. 5 & 6.
FIGS. 7 & 8 are representative cross-sectional views of another configuration of the fluid discriminator, a fluid composition being directed to different outlet flow paths in FIGS. 7 & 8.
FIG. 9 is a representative cross-sectional view of another configuration of the fluid discriminator.
FIG. 10 is a representative cross-sectional view of the fluid discriminator, taken along line 10-10 of FIG. 9.
FIG. 11 is a representative cross-sectional view of a fluid switch which may be used in the fluid discriminator.
FIG. 12 is a representative cross-sectional view of another configuration of the fluid switch.
FIGS. 13 & 14 are representative cross-sectional views of another configuration of the fluid discriminator, FIG. 13 being taken along line 13-13 of FIG. 14.
FIGS. 15 & 16 are representative cross-sectional views of another configuration of the fluid discriminator, FIG. 16 being taken along line 16-16 of FIG. 15.

### DETAILED DESCRIPTION

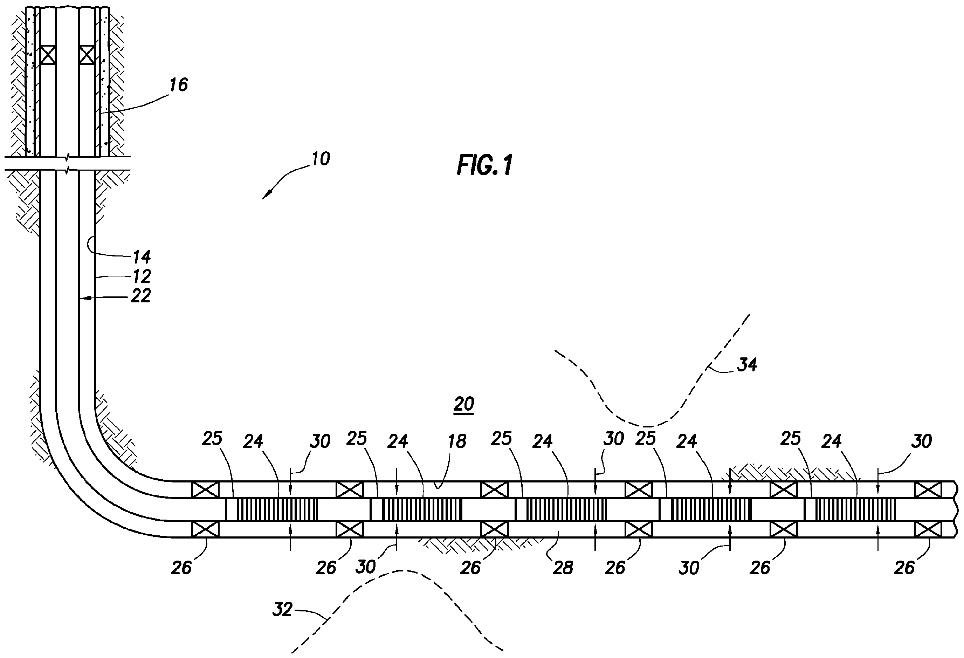

Representatively illustrated in FIG. 1 is a system 10 for use with a well. As depicted in FIG. 1, a wellbore 12 has a generally vertical uncased section 14 extending downwardly from casing 16, as well as a generally horizontal uncased section 18 extending through an earth formation 20.

A tubular string 22 (such as a production tubing string) is installed in the wellbore 12. Interconnected in the tubular string 22 are multiple well screens 24, fluid discrimination systems 25 and packers 26.

The packers 26 seal off an annulus 28 formed radially between the tubular string 22 and the wellbore section 18. In this manner, fluids 30 may be produced from multiple intervals or zones of the formation 20 via isolated portions of the annulus 28 between adjacent pairs of the packers 26.

Positioned between each adjacent pair of the packers 26, a well screen 24 and a fluid discrimination system 25 are interconnected in the tubular string 22. The well screen 24 filters the fluids 30 flowing into the tubular string 22 from the annulus 28. The fluid discrimination system 25 discriminates between the fluids 30 that are flowed into the tubular string 22, based on certain characteristics of the fluids.

At this point, it should be noted that the system 10 is illustrated in the drawings and is described herein as merely one example of a wide variety of systems in which the principles of this disclosure can be utilized. It should be clearly understood that the principles of this disclosure are not limited at all to any of the details of the system 10, or components thereof, depicted in the drawings or described herein.

For example, it is not necessary in keeping with the principles of this disclosure for the wellbore 12 to include a generally vertical wellbore section 14 or a generally horizontal wellbore section 18. It is not necessary for fluids 30 to be only produced from the formation 20 since, in other examples, fluids could be injected into a formation, fluids could be both injected into and produced from a formation, etc.

It is not necessary for one each of the well screen 24 and fluid discrimination system 25 to be positioned between each adjacent pair of the packers 26. It is not necessary for a single fluid discrimination system 25 to be used in conjunction with a single well screen 24. Any number, arrangement and/or combination of these components may be used.

It is not necessary for any fluid discrimination system 25 to be used with a well screen 24. For example, in injection operations, the injected fluid could be flowed through a fluid discrimination system 25, without also flowing through a well screen 24.

It is not necessary for the well screens 24, fluid discrimination systems 25, packers 26 or any other components of the tubular string 22 to be positioned in uncased sections 14, 18 of the wellbore 12. Any section of the wellbore 12 may be cased or uncased, and any portion of the tubular string 22 may be positioned in an uncased or cased section of the wellbore, in keeping with the principles of this disclosure.

It should be clearly understood, therefore, that this disclosure describes how to make and use certain examples, but the principles of the disclosure are not limited to any details of those examples. Instead, those principles can be applied to a variety of other examples using the knowledge obtained from this disclosure.

It will be appreciated by those skilled in the art that it would be beneficial to be able to regulate flow of the fluids 30 into the tubular string 22 from each zone of the formation 20, for example, to prevent water coning 32 or gas coning 34 in the formation. Other uses for flow regulation in a well include, but are not limited to, balancing production from (or injection into) multiple zones, minimizing production or injection of undesired fluids, maximizing production or injection of desired fluids, transmitting signals, etc.

In certain examples described below, resistance to flow through the systems 25 can be selectively varied, on demand and/or in response to a particular condition. For example, flow through the systems 25 could be relatively restricted while the tubular string 22 is installed, and during a gravel packing operation, but flow through the systems could be relatively unrestricted when producing the fluid 30 from the formation 20. As another example, flow through the systems 25 could be relatively restricted at elevated temperature indicative of steam breakthrough in a steam flooding operation, but flow through the systems could be relatively unrestricted at reduced temperatures.

An example of the fluid discrimination systems 25 described more fully below can also increase resistance to flow if a fluid velocity or density increases (e.g., to thereby balance flow among zones, prevent water or gas coning, etc.), or increase resistance to flow if a fluid viscosity decreases (e.g., to thereby restrict flow of an undesired fluid, such as water or gas, in an oil producing well). Conversely, these fluid discrimination systems 25 can decrease resistance to flow if fluid velocity or density decreases, or if fluid viscosity increases.

Whether a fluid is a desired or an undesired fluid depends on the purpose of the production or injection operation being conducted. For example, if it is desired to produce oil from a well, but not to produce water or gas, then oil is a desired fluid and water and gas are undesired fluids. If it is desired to inject steam instead of water, then steam is a desired fluid and water is an undesired fluid. If it is desired to produce hydrocarbon gas and not water, then hydrocarbon gas is a desired fluid and water is an undesired fluid.

Note that, at downhole temperatures and pressures, hydrocarbon gas can actually be completely or partially in liquid phase. Thus, it should be understood that when the term "gas" is used herein, supercritical, liquid and/or gaseous phases are included within the scope of that term.

In other examples, a fluid discriminator of the system 25 can be used to separate fluids in the fluid composition 36 (for example, to flow different fluid types to respective different processing facilities, to produce only certain fluid type(s), to inject only certain fluid type(s), etc.). Thus, it should be understood that the fluid discriminator may be used for any purpose, and is not necessarily used for variably resisting flow, in keeping with the scope of this disclosure.

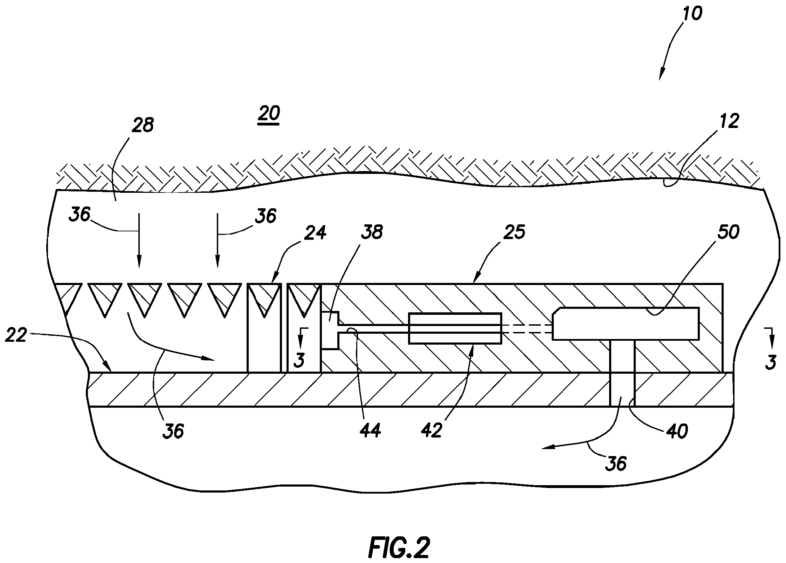

Referring additionally now to FIG. 2, an enlarged scale cross-sectional view of one of the fluid discrimination systems 25, and a portion of one of the well screens 24, is representatively illustrated. In this example, a fluid composition 36 (which can include one or more fluid types, such as oil and water, liquid water and steam, oil and gas, gas and water, oil, water and gas, etc.) flows into the well screen 24, is thereby filtered, and then flows into an inlet 38 of the fluid discrimination system 25.

A fluid composition can include one or more undesired or desired fluids. Both steam and liquid water can be combined in a fluid composition. As another example, oil, water and/or gas can be combined in a fluid composition.

Flow of the fluid composition 36 through the fluid discrimination system 25 is resisted based on one or more characteristics (such as flow direction, viscosity, velocity, density, etc.) of the fluid composition. The fluid composition 36 is then discharged from the fluid discrimination system 25 to an interior of the tubular string 22 via an outlet 40.

In other examples, the well screen 24 may not be used in conjunction with the fluid discrimination system 25 (e.g., in injection operations), the fluid composition 36 could flow in an opposite direction through the various elements of the well system 10 (e.g., in injection operations), a single fluid discrimination system could be used in conjunction with multiple well screens, multiple fluid discrimination systems could be used with one or more well screens, the fluid composition could be received from or discharged into regions of a well other than an annulus or a tubular string, the fluid composition could flow through the fluid discrimination system prior to flowing through the well screen, any other components could be interconnected upstream or downstream of the well screen and/or fluid discrimination system, etc. Thus, it will be appreciated that the principles of this disclosure are not limited at all to the details of the example depicted in FIG. 2 and described herein.

Although the well screen 24 depicted in FIG. 2 is of the type known to those skilled in the art as a wire-wrapped well screen, any other types or combinations of well screens (such as sintered, expanded, pre-packed, wire mesh, etc.) may be used in other examples. Additional components (such as shrouds, shunt tubes, lines, instrumentation, sensors, inflow control devices, etc.) may also be used, if desired.

The fluid discrimination system 25 is depicted in simplified form in FIG. 2, but in a preferred example, the system can include various passages and devices for performing various functions, some examples of which are described more fully below. In addition, the system 25 preferably at least partially extends circumferentially about the tubular string 22, or the system may be formed in a wall of a tubular structure interconnected as part of the tubular string.

In other examples, the system 25 may not extend circumferentially about a tubular string or be formed in a wall of a tubular structure. For example, the system 25 could be formed in a flat structure, etc. The system 25 could be in a separate housing that is attached to the tubular string 22, or it could be oriented so that the axis of the outlet 40 is parallel to the axis of the tubular string. The system 25 could be on a logging string or attached to a device that is not tubular in shape. Any orientation or configuration of the system 25 may be used in keeping with the principles of this disclosure.

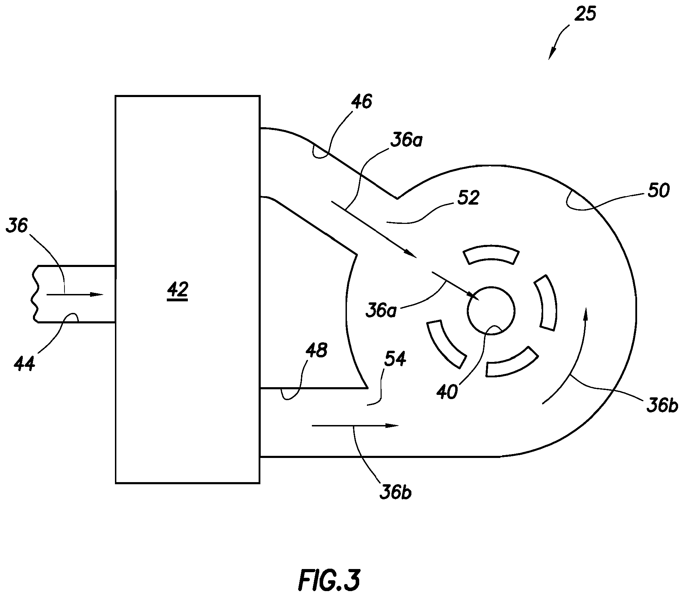

Referring additionally now to FIG. 3, a cross-sectional view of the fluid discrimination system 25, taken along line 3-3 of FIG. 2, is representatively illustrated. The fluid discrimination system 25 example depicted in FIG. 3 may be used in the well system 10 of FIGS. 1 & 2, or it may be used in other well systems in keeping with the principles of this disclosure.

In FIG. 3, it may be seen that the fluid composition 36 flows from the inlet 38 to the outlet 40 via inlet flow path 44, a fluid discriminator 42, outlet flow paths 46, 48 and a flow chamber 50. The outlet flow paths 46, 48 intersect the chamber 50 at inlets 52, 54.

The outlet flow path 46 intersects the chamber 50 in a generally radial direction relative to the chamber and outlet 40. The outlet flow path 48, however, intersects the chamber 50 generally tangentially. Thus, flow entering the chamber 50 from the inlet 52 is in a generally radial direction, and flow entering the chamber from the inlet 54 is in a generally tangential direction. The tangential flow from the inlet 54 is guided to rotational flow by an outer wall of the chamber 50.

It will be appreciated that the indirect rotational flow from the inlet 54 to the outlet 40 dissipates more energy as compared to the relatively direct radial flow from the inlet 52 to the outlet 40. Therefore, rotational (including, e.g., spiral, helical, etc.) flow is resisted more by the system 25 than is radial flow of the fluid composition 36 through the chamber 50.

The fluid discriminator 42, in this example, discriminates between various fluid types in the fluid composition 36, or between ratios of desired to undesired fluids in the fluid composition, so that a fluid composition 36a having one fluid type, level of fluid type, ratio of desired to undesired fluid, etc., is directed to flow through the outlet flow path 46 to the chamber inlet 52, and another fluid composition 36b having a different fluid type, different level of fluid type, different ratio of desired to undesired fluid, etc., is directed to flow through the other outlet flow path 48 to the chamber inlet 54. Thus, the resistance to flow of the fluid composition 36 through the system 25 can be varied based on the fluid type(s) or the ratio of desired to undesired fluid in the fluid composition.

For example, the fluid discriminator 42 can cause more of the fluid composition 36 to flow through the outlet flow path 46 (thereby decreasing resistance to such flow) when the ratio of desired to undesired fluid increases, or when a certain desired fluid type or proportion of fluid type is present in the fluid composition, and the fluid discriminator can cause more of the fluid composition to flow through the outlet flow path 48 (thereby increasing resistance to such flow) when the ratio of desired to undesired fluid decreases, or when a certain desired fluid type or proportion of fluid type is not present in the fluid composition.

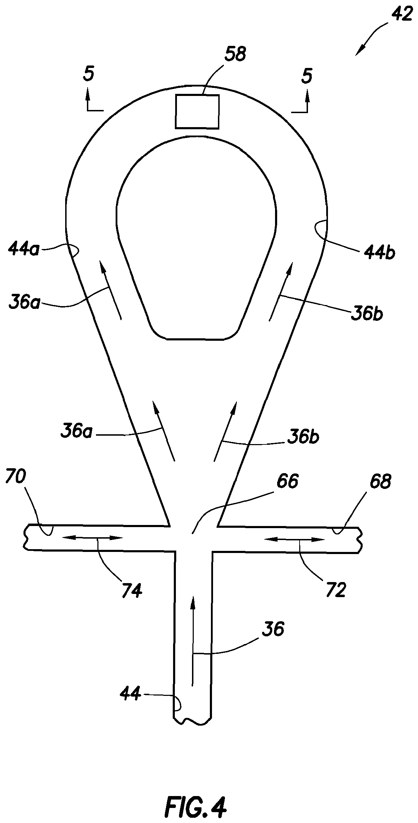

Referring additionally now to FIGS. 4-6, one example of the fluid discriminator 42 is representatively illustrated. The fluid discriminator 42 may be used in the fluid discrimination system 25 and well system 10 described above, or the fluid discriminator may be used with other systems in keeping with the scope of this disclosure.

The configuration of FIGS. 4-6 includes a structure 58 which displaces in response to a change in a proportion of the fluid composition 36 which flows through inlet flow paths 44a,b (that is, a ratio of the fluid composition which flows through one inlet flow path and the fluid composition which flows through the other inlet flow path).

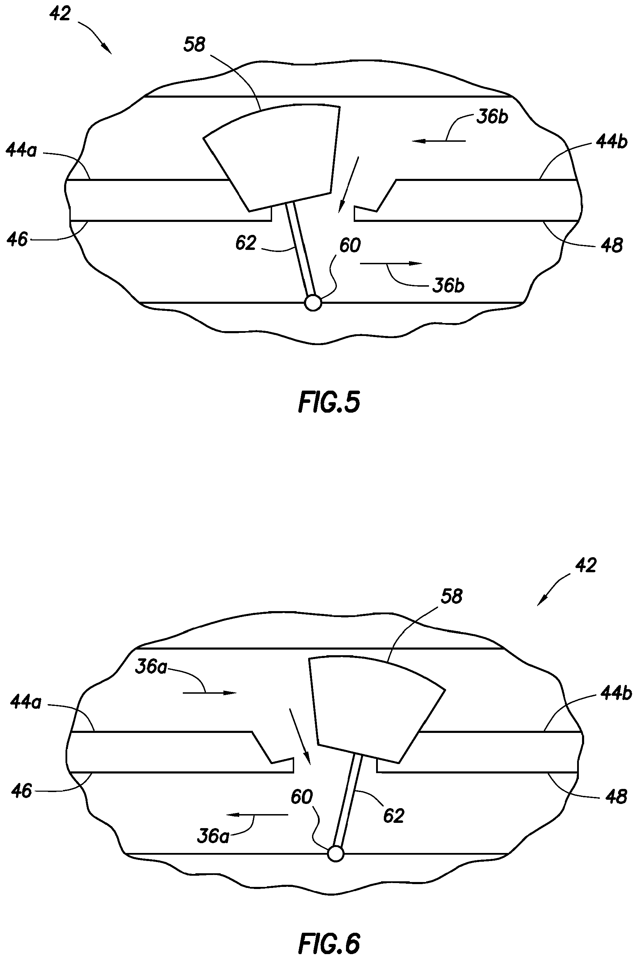

For example, in FIG. 5, a majority of the fluid composition 36b flows via the flow path 44b, and this flow impinging on the structure 58 causes the structure to displace to a position in which such flow is directed to the outlet flow path 48. Note that, in FIG. 5, the structure 58 and a beam 62 extending between the structure and a connection 60 substantially block the fluid composition 36b from flowing to the outlet flow path 46.

In FIG. 6, a majority of the fluid composition 36a flows via the flow path 44a and, in response, the structure 58 displaces to a position in which such flow is directed to the outlet flow path 46. The structure 58 and the beam 62 substantially block the fluid composition 36a from flowing to the outlet flow path 48.

In other examples, the structure 58 or beam 62 may not block the flow of the fluid composition 36 (e.g., another member or structure may be used to block such flow), and the structure could be biased toward the FIG. 5 and/or FIG. 6 position (e.g., using springs, compressed gas, other biasing devices, etc.), thereby changing the proportion of the fluid composition 36 which must flow through a particular flow path 44a,b in order to displace the structure. Preferably, the fluid composition 36 does not have to exclusively flow through only one of the flow paths 44a,b in order to displace the structure 58 to a particular position, but such a design could be implemented, if desired.

The structure 58 is mounted via the connection 60. Preferably, the connection 60 serves to secure the structure 58, and also to resist a pressure differential applied across the structure from the flow paths 44a,b to the outlet flow paths 46, 48. When the fluid composition 36 is flowing through the system 25, this pressure differential can exist, and the connection 60 can resist the resulting forces applied to the structure 58, while still permitting the structure to displace freely in response to a change in the proportion of the flow via the flow paths 44a,b.

In the FIGS. 5 & 6 example, the connection 60 is depicted as a pivoting or rotational connection. However, in other examples, the connection 60 could be a rigid, sliding, translating, or other type of connection, thereby allowing for displacement of the structure 58 in any of circumferential, axial, longitudinal, lateral, radial, etc., directions.

In one example, the connection 60 could be a rigid connection, with a flexible beam 62 extending between the connection and the structure 58. The beam 62 could flex, instead of the connection 60 rotating, in order to allow the structure 58 to displace, and to provide a biasing force toward the position of FIG. 5, toward the position of FIG. 6, or toward any other position (e.g., a position between the FIGS. 5 & 6 positions, etc.).

The FIGS. 4-6 configuration utilizes a fluid switch 66 with multiple control passages 68, 70. The fluid switch 66 directs the fluid composition 36 flow toward the flow path 44a when flow 72 through the control passage 68 is toward the fluid switch, and/or when flow 74 in the control passage 70 is away from the fluid switch. The fluid switch 66 directs the fluid composition 36 flow toward the flow path 44b when flow 72 through the control passage 68 is away from the fluid switch, and/or when flow 74 in the control passage 70 is toward the fluid switch.

Thus, since the proportion of the fluid composition 36 which flows through the flow paths 44a,b can be changed by the fluid switch 66, in response to the flows 72, 74 through the control passages 68, 70, it follows that the resistance to flow of the fluid composition 36 through the system 25 can be changed by changing the flows through the control passages. For this purpose, the control passages 68, 70 may be connected to any of a variety of devices for influencing the flows 72, 74 through the control passages.

The flows 72, 74 through the control passages 68, 70 could be automatically changed in response to changes in one or more properties (such as density, viscosity, velocity, etc.) of the fluid composition 36, the flows could be controlled locally (e.g., in response to sensor measurements, etc.), or the flows could be controlled remotely (e.g., from the earth's surface, another remote location, etc.). Any technique for controlling the flows 72, 74 through the control passages 68, 70 may be used, in keeping with the scope of this disclosure.

Preferably, the flow 72 is toward the fluid switch 66, and/or the flow 74 is away from the fluid switch, when the fluid composition 36 has an increased ratio of desired to undesired fluids, or a certain proportion of a desired fluid type, so that more of the fluid composition will be directed by the fluid switch to flow toward the flow path 44a, thereby reducing the resistance to flow through the system 25. Conversely, the flow 72 is preferably away from the fluid switch 66, and/or the flow 74 is preferably toward the fluid switch, when the fluid composition 36 has a decreased ratio of desired to undesired fluids, or less than a threshold level of a desired fluid type, so that more of the fluid composition will be directed by the fluid switch to flow toward the flow path 44b, thereby increasing the resistance to flow through the system 25.

In other examples, the outlet flow paths 46, 48 could be connected to separate processing facilities for the different fluid types in the fluid composition 36, or the outlet flow paths could be connected to different production or injection equipment, etc. Thus, it should be understood that it is not necessary in keeping with the scope of this disclosure for the system 25 to variably resist flow of the fluid composition 36 from the fluid discriminator 42.

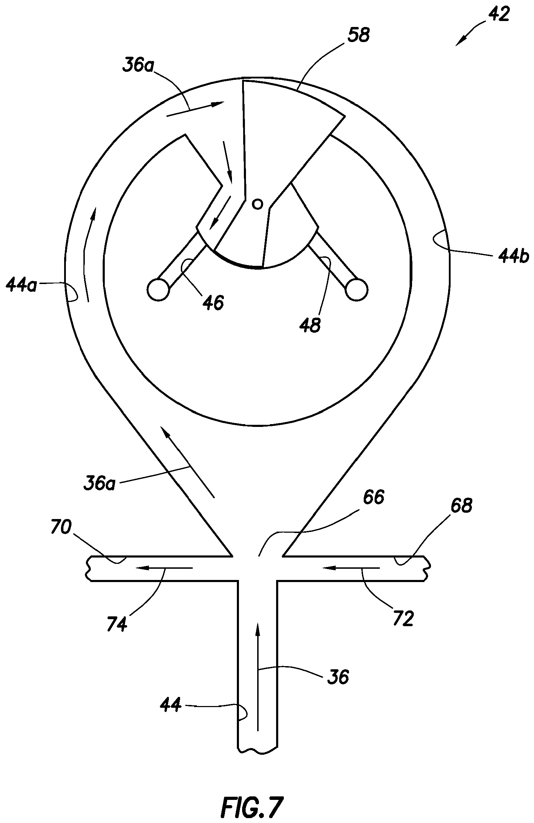

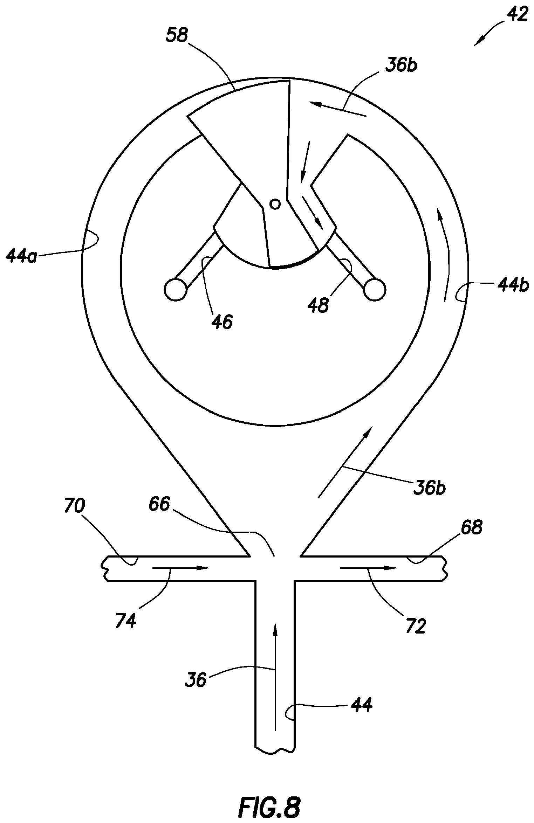

Referring additionally now to FIGS. 7 & 8, another configuration of the fluid discriminator 42 is representatively illustrated. In this configuration, the structure 58 rotates about the connection 60, in order to direct flow more toward the outlet flow path 46 (FIG. 7) or more toward the outlet flow path 48 (FIG. 8).

As in the configuration of FIGS. 4-6, the configuration of FIGS. 7 & 8 has the structure 58 exposed to flow in both of the flow paths 44a,b. Depending on a proportion of these flows, the structure 58 can displace to either of the FIGS. 7 & 8 positions (or to any position in-between those positions). The structure 58 in the FIGS. 4-8 configurations can be biased toward any position, or releasably retained at any position, in order to adjust the proportion of flows through the flow paths 44a,b needed to displace the structure to another position.

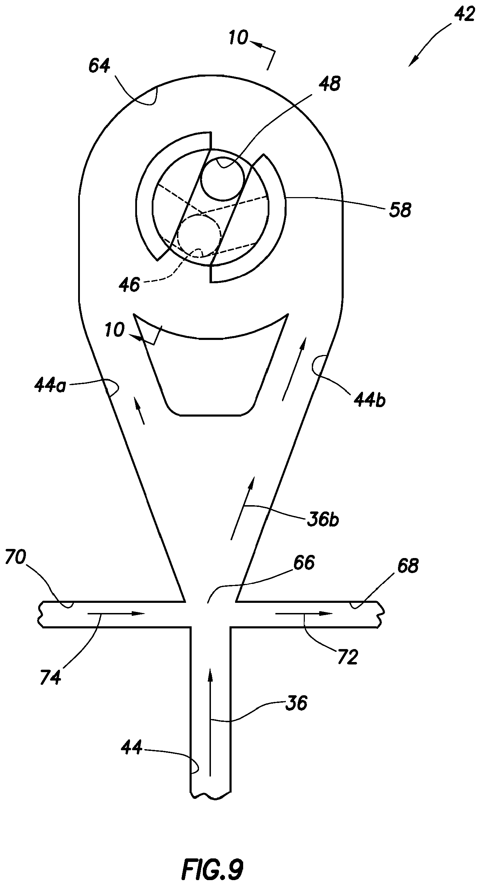

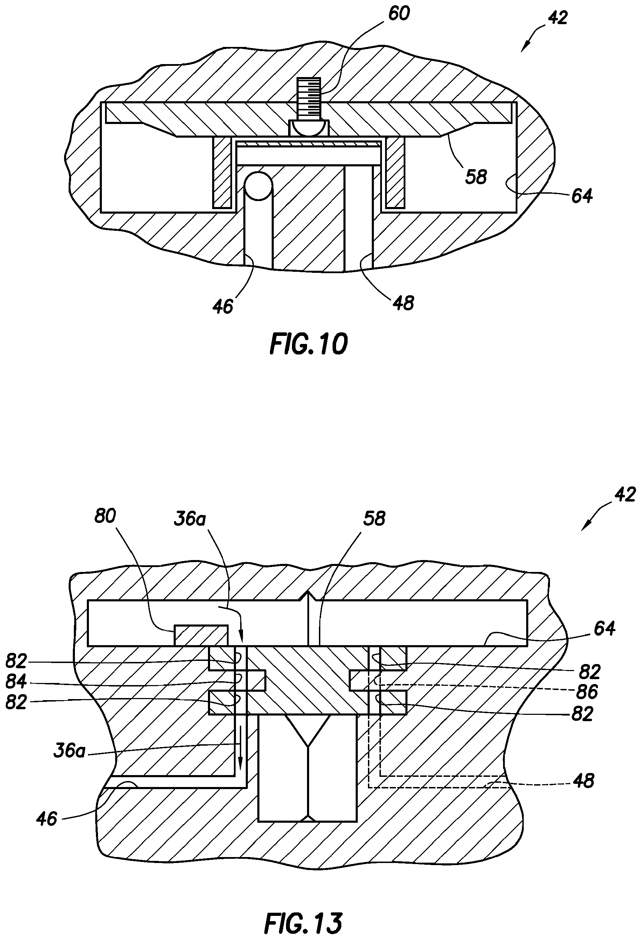

Referring additionally now to FIGS. 9 & 10, another configuration of the fluid discriminator 42 is representatively illustrated. In this configuration, the structure 58 is positioned in a chamber 64 connected to the flow paths 46, 48.

In the FIGS. 9 & 10 example, a majority of the flow of the fluid composition 36 through the flow path 44a results in the structure 58 rotating about the connection 60 to a position in which flow is directed to the outlet flow path 46. However, if a majority of the flow is through the flow path 44b to the chamber 64 (as depicted in FIG. 9), the structure 58 will rotate to a position in which the flow is directed to the outlet flow path 48.

The structure 58 in this example rotates about the connection 60 in response to rotational flow of the fluid composition 36 in the chamber 64. The direction of this rotational flow determines the direction of rotation of the structure 58, and thus determines whether more of the fluid composition 36 will exit the chamber 64 via the flow path 46 or the flow path 48.

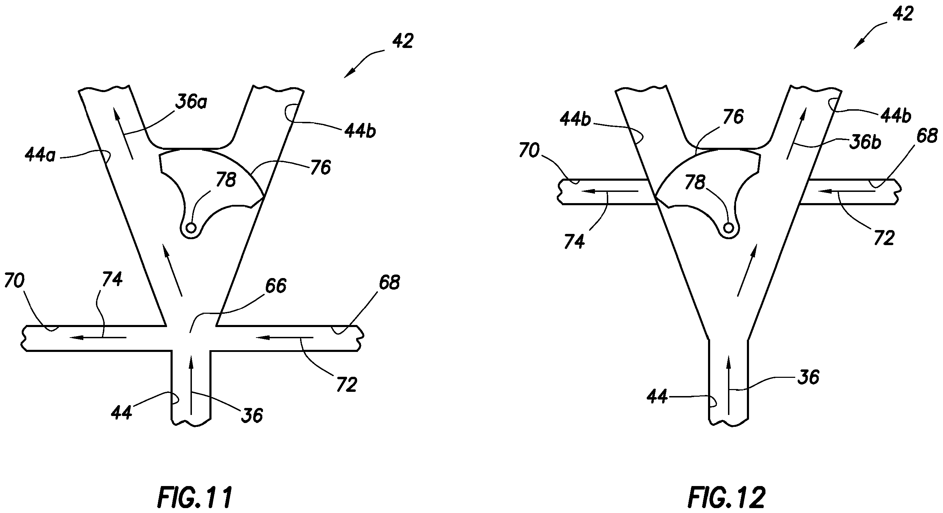

Referring additionally now to FIGS. 11 & 12, additional configurations of the fluid switch 66 are representatively illustrated. The fluid switch 66 in these configurations has a blocking device 76 which rotates about a connection 78 to increasingly block flow through one of the inlet flow paths 44a,b when the fluid switch directs the flow toward the other flow path. These fluid switch 66 configurations may be used in any fluid discriminator 42 configuration.

In the FIG. 11 example, either or both of the control passage flows 72, 74 influence the fluid composition 36 to flow toward the flow path 44a. Due to this flow toward the flow path 44a impinging on the blocking device 76, the blocking device rotates to a position in which the other flow path 44b is completely or partially blocked, thereby influencing an even greater proportion of the fluid composition to flow via the flow path 44a, and not via the flow path 44b. However, if either or both of the control passage flows 72, 74 influence the fluid composition 36 to flow toward the flow path 44b, this flow impinging on the blocking device 76 will rotate the blocking device to a position in which the other flow path 44a is completely or partially blocked, thereby influencing an even greater proportion of the fluid composition to flow via the flow path 44b, and not via the flow path 44a.

In the FIG. 12 example, either or both of the control passage flows 72, 74 influence the blocking device 76 to increasingly block one of the flow paths 44a,b. Thus, an increased proportion of the fluid composition 36 will flow through the flow path 44a,b which is less blocked by the device 76. When either or both of the flows 72, 74 influence the blocking device 76 to increasingly block the flow path 44a, the blocking device rotates to a position in which the other flow path 44b is not blocked, thereby influencing a greater proportion of the fluid composition to flow via the flow path 44b, and not via the flow path 44a. However, if either or both of the control passage flows 72, 74 influence the blocking device 76 to rotate toward the flow path 44b, the other flow path 44a will not be blocked, and a greater proportion of the fluid composition 36 will flow via the flow path 44a, and not via the flow path 44b.

By increasing the proportion of the fluid composition 36 which flows through the flow path 44a or 44b, operation of the fluid discriminator 42 is made more efficient. For example, resistance to flow through the system 25 can be readily increased when an unacceptably low ratio of desired to undesired fluids exists in the fluid composition 36, and resistance to flow through the system can be readily decreased when the fluid composition has a relatively high ratio of desired to undesired fluids.

In other examples, separation of fluid types can be made more efficient by increasing the proportion of the fluid composition 36 which flows through either the flow path 44a or the flow path 44b. The separated fluid types could be flowed to separate processing facilities, one fluid type could be produced, another fluid type could be injected into the formation 20 or another formation, etc.

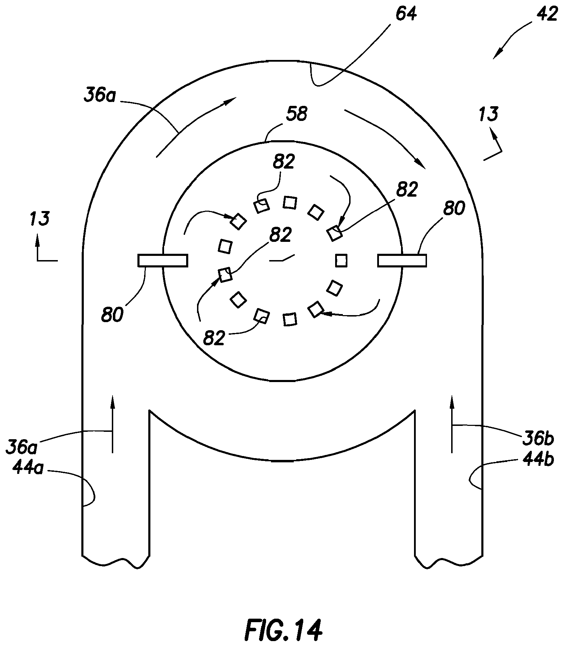

Referring additionally now to FIGS. 13 & 14, another configuration of the fluid discriminator 42 is representatively illustrated. This configuration is similar in some respects to the configuration of FIGS. 9 & 10, in that the structure 58 rotates in the chamber 64 in order to change the outlet flow path 46, 48. The direction of rotation of the structure 58 depends on through which of the flow paths 44a or 44b a greater proportion of the fluid composition 36 flows.

In the FIGS. 13 & 14 example, the structure 58 includes vanes 80 on which the fluid composition 36 impinges. Thus, rotational flow in the chamber 64 impinges on the vanes 80 and biases the structure 58 to rotate in the chamber.

When the structure 58 is in the position depicted in FIGS. 13 & 14, openings 82 align with openings 84, the structure substantially blocks flow from the chamber 64 to the outlet flow path 48, and the structure does not substantially block flow from the chamber 64 to the outlet flow path 46. However, if the structure 58 rotates to a position in which the openings 82, 86 are aligned, then the structure will not substantially block flow from the chamber 64 to the outlet flow path 48, and the structure will substantially block flow from the chamber 64 to the outlet flow path 46.

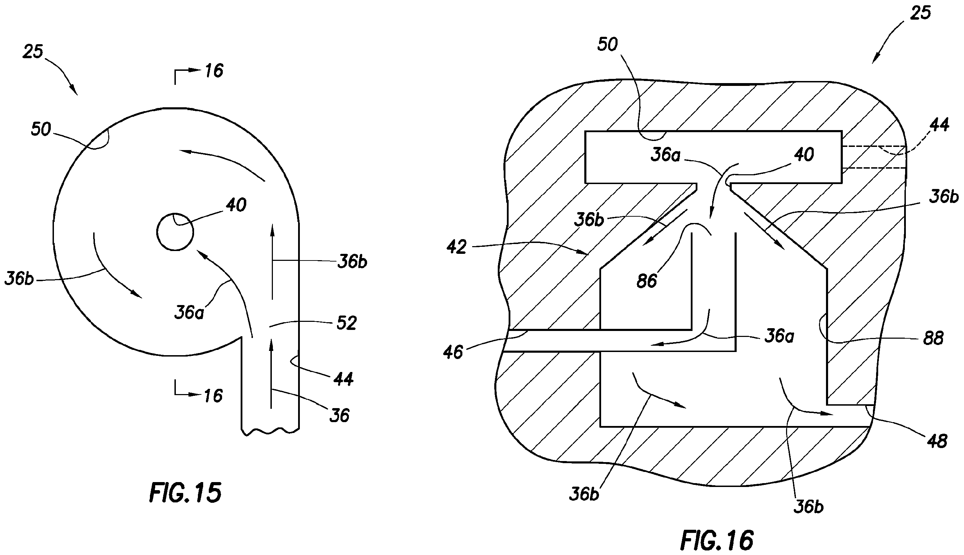

Referring additionally now to FIGS. 15 & 16, another configuration of the fluid discrimination system 25 is representatively illustrated. In this configuration, the fluid discriminator 42 is downstream of the chamber 50, thus, the fluid discriminator receives the fluid composition 36 which flows through the outlet 40. The fluid composition 36 flows more toward the outlet flow path 46 or 48, depending on whether the fluid composition flows directly or rotationally through the outlet 40.

In this example, the chamber 50 has only the inlet 52 through which the fluid composition 36 flows into the chamber. However, in other examples, multiple inlets (such as the multiple inlets 52, 54 of FIG. 3) could be used.

As depicted in FIG. 15, the fluid composition 36a (e.g., which can have a relatively low velocity, a relatively low density, a relatively high viscosity, a relatively high ratio of desired to undesired fluid, and/or a certain proportion of a desired fluid type, etc.) can flow directly radially toward the outlet 40 from the inlet 52, and so such flow has only minimal or no rotational direction to it. However, the fluid composition 36b (e.g., which can have a relatively high velocity, a relatively high density, a relatively low viscosity, a relatively low ratio of desired to undesired fluid, and/or less than a certain proportion of a desired fluid type, etc.) flows rotationally about the chamber 50 and the outlet 40 from the inlet 52.

As depicted in FIG. 16, the flow of the fluid composition 36a enters the outlet 40 from a radial direction, and flows directly into the outlet flow passage 46, an inlet 86 of which is positioned centrally with respect to the outlet 40 and within another chamber 88. The fluid composition 36b, however, flows rotationally through the outlet 40. The rotational momentum of the fluid composition 36b causes it to flow outward toward an outer wall of the chamber 88 as the fluid composition enters the chamber 88 via the outlet 40. The outlet flow path 48 receives the fluid composition 36b which flows along the walls of the chamber 88, but the outlet flow path 46 receives the fluid composition 36a which flows from the outlet 40 to the centrally located inlet 86.

Note that, although in certain examples described above, the two fluid compositions 36a,b may be depicted in a same drawing figure, this does not necessarily require that the fluid compositions 36a,b flow through the system 25 at the same time. Instead, the fluid composition 36 can at some times have the properties, characteristics, etc., of the fluid composition 36a (e.g., with a relatively low velocity, a relatively low density, a relatively high viscosity, a relatively high ratio of desired to undesired fluid, and/or a certain proportion of a desired fluid type, etc.), and the fluid composition 36 can at other times have the properties, characteristics, etc., of the fluid composition 36b (e.g., with a relatively high velocity, a relatively high density, a relatively low viscosity, a relatively low ratio of desired to undesired fluid, and/or less than a certain proportion of a desired fluid type, etc.). The fluid compositions 36a,b are depicted as merely two examples of the fluid composition 36, for illustration of how the fluid composition can flow differently through the system 25 based on different properties, characteristics, etc. of the fluid composition.

Although in certain examples described above, the structure 58 displaces by pivoting or rotating, it will be appreciated that the structure could be suitably designed to displace in any direction to thereby change the flow direction through the system 25. In various examples, the structure 58 could displace in circumferential, axial, longitudinal, lateral and/or radial directions.

Although in the examples described above only two outlet flow paths 46, 48 and two inlet flow paths 44a,b are used, it should be understood that the fluid discriminator 42 could be configured to utilize any number of outlet or inlet flow paths.

It may now be fully appreciated that this disclosure provides significant advancements to the art of discriminating between fluids in conjunction with well operations. In multiple examples described above, the fluid composition 36 can be directed to flow to different outlet flow paths 46, 48, depending on different properties, characteristics, etc. of fluids in the fluid composition.

In one example, a fluid discrimination system 25 for use with a subterranean well is described above. The system 25 can include a fluid discriminator 42 which selects through which of multiple outlet flow paths 46, 48 a fluid composition 36 flows, the selection being based on at least one direction of flow of the fluid composition 36 through the fluid discriminator 42, and the direction being dependent on at least one fluid type in the fluid composition 36.

The fluid discriminator 42 may select a first outlet flow path 46 in response an increase in a ratio of desired to undesired fluid in the fluid composition 36, and the fluid discriminator 42 may select a second outlet flow path 48 in response to a decrease in the ratio of desired to undesired fluid.

The fluid discriminator 42 may select a first outlet flow path 46 in response to the direction of flow being more radial, and the fluid discriminator 42 may select a second outlet flow path 48 in response to the direction of flow being more rotational.

The at least one direction can comprise opposite directions.

The at least one direction can comprise first and second directions. The fluid discriminator 42 can select a first outlet flow path 46 in response to flow of the fluid composition 36 more in the first direction, and the fluid discriminator 42 can select a second outlet flow path 48 in response to flow of the fluid composition 36 more in the second direction.

The flow of the fluid composition 36 in the first direction may impinge on a structure 58, whereby the structure 58 displaces and the first outlet flow path 46 is selected. The flow of the fluid composition 36 in the second direction may impinge on the structure 58, whereby the structure 58 displaces and the second outlet flow path 48 is selected. The structure 58 may rotate in response to the impingement of the fluid composition 36 on the structure 58.

A fluid switch 66 may select in which of the first and second directions the fluid composition 36 flows. The fluid switch 66 may direct the fluid composition 36 to flow more in the first direction in response to an increase in a ratio of desired to undesired fluid, and the fluid switch 66 may direct the fluid composition 36 to flow more in the second direction in response to a decrease in the ratio of desired to undesired fluid.

The first direction may be a radial direction. The second direction may be rotational.

Also described above is a fluid discriminator for use with a subterranean well. In one example, the fluid discriminator 42 can include a structure 58 which displaces in response to a flow of a fluid composition 36, whereby an outlet flow path 46, 48 of a majority of the fluid composition 36 changes in response to a change in a ratio of fluids in the fluid composition 36.

The structure 58 can be exposed to the flow of the fluid composition 36 in at least first and second directions. The outlet flow path 46, 48 can change in response to a change in a proportion of the fluid composition 36 which flows in the first and second directions.

The structure 58 may be more biased in a first direction by the flow of the fluid composition 36 more in the first direction, and the structure 58 may be more biased in a second direction by the flow of the fluid composition 36 more in the second direction.

The first direction may be opposite to the second direction. The first and second directions can comprise at least one of circumferential, axial, longitudinal, lateral, and/or radial directions.

The fluid discriminator 42 can also include a fluid switch 66 which directs the flow of the fluid composition 36 to at least first and second inlet flow paths 44a,b.

The structure 58 may be more biased in a first direction by the flow of the fluid composition 36 more through the first inlet flow path 44a, and the structure 58 may be more biased in a second direction by the flow of the fluid composition 36 more through the second inlet flow path 44b.

The structure 58 may pivot or rotate, and thereby change the outlet flow path 46, 48, in response to a change in a proportion of the fluid composition 36 which flows through the first and second inlet flow paths 44a,b. The structure 58 may rotate, and thereby change the outlet flow path 46, 48, in response to a change in a ratio of desired to undesired fluids.

The fluid switch 66 may comprise a blocking device 76 which at least partially blocks the flow of the fluid composition 36 through at least one of the first and second inlet flow paths 44a,b. The blocking device 76 can increasingly block one of the first and second inlet flow paths 44a,b, in response to the flow of the fluid composition 36 toward the other of the first and second inlet flow paths 44a,b. The fluid switch 66 may direct the flow of the fluid composition 36 toward one of the first and second inlet flow paths 44a,b in response to the blocking device 76 increasingly blocking the other of the first and second inlet flow paths 44a,b.

A method of discriminating between fluids flowed in a subterranean well is also described above. In one example, the method can include providing a fluid discriminator 42 which selects through which of multiple outlet flow paths 46, 48 a fluid composition 36 flows in the well, the selection being based on at least one direction of flow of the fluid composition 36 through the fluid discriminator 42, and the direction being dependent on a ratio of the fluids in the fluid composition 36.

The fluid discriminator 42 may select a first outlet flow path 46 in response an increase in the ratio of fluids, and the fluid discriminator 42 may select a second outlet flow path 48 in response to a decrease in the ratio of fluids.

The fluid discriminator 42 may select a first outlet flow path 46 in response to the direction of flow being more radial, and the fluid discriminator 42 may select a second outlet flow path 48 in response to the direction of flow being more rotational.

The at least one direction can comprise first and second directions. The fluid discriminator 42 can select a first outlet flow path 46 in response to flow of the fluid composition 36 more in the first direction, and the fluid discriminator 42 can select a second outlet flow path 48 in response to flow of the fluid composition 36 more in the second direction.

The flow of the fluid composition 36 in the first direction may impinge on a structure 58, whereby the structure 58 displaces and the first outlet flow path 46 is selected. The flow of the fluid composition 36 in the second direction may impinge on the structure 58, whereby the structure 58 displaces and the second outlet flow path 48 is selected. The structure 58 can rotate in response to the impingement of the fluid composition 36 on the structure 58.

A fluid switch 66 may select in which of the first and second directions the fluid composition 36 flows. The fluid switch 66 may direct the fluid composition 36 to flow more in the first direction in response to an increase in the ratio of fluids, and the fluid switch 66 may direct the fluid composition 36 to flow more in the second direction in response to a decrease in the ratio of fluids.

Although various examples have been described above, with each example having certain features, it should be understood that it is not necessary for a particular feature of one example to be used exclusively with that example. Instead, any of the features described above and/or depicted in the drawings can be combined with any of the examples, in addition to or in substitution for any of the other features of those examples. One example's features are not mutually exclusive to another example's features.

Although each example described above includes a certain combination of features, it should be understood that it is not necessary for all features of an example to be used. Instead, any of the features described above can be used, without any other particular feature or features also being used.

It should be understood that the various examples described herein may be utilized in various orientations, such as inclined, inverted, horizontal, vertical, etc., and in various configurations, without departing from the principles of this disclosure. The examples are described merely as examples of useful applications of the principles of the disclosure, which is not limited to any specific details of these examples. For the avoidance of doubt, the scope of the invention is defined by the herein appended claims.

In the above description of the representative examples, directional terms (such as "above," "below," "upper," "lower," etc.) are used for convenience in referring to the accompanying drawings. However, it should be clearly understood that the scope of this disclosure is not limited to any particular directions described herein.

The terms "including," "includes," "comprising," "comprises," and similar terms are used in a non-limiting sense in this specification. For example, if a system, method, apparatus, device, etc., is described as "including" a certain feature or element, the system, method, apparatus, device, etc., can include that feature or element, and can also include additional features or elements (the same as or different from the named feature or element). Similarly, the term "comprises" is considered to mean "comprises, but is not limited to."

## Claims

1. A fluid discriminator (42) for use with a subterranean well (12), the fluid discriminator (42) comprising:
a structure (58) which displaces in response to a flow of a fluid composition (36), whereby an outlet flow path (46, 48) of a majority of the fluid composition (36) changes in response to a change in a ratio of fluids in the fluid composition (36);
**characterised in that** the fluid discriminator (42) further comprises a fluid switch (66) which directs the flow of the fluid composition (36) to at least first and second inlet flow paths (44a, 44b) wherein the fluid switch (66) comprises a blocking device (76) which at least partially blocks the flow of the fluid composition (36) through at least one of the first and second inlet flow paths (44a, 44b), and further wherein
the fluid switch (66) directs the flow of the fluid composition (36) toward one of the first and second inlet flow paths (44a, 44b) in response to the blocking device (76) increasingly blocking the other of the first and second inlet flow paths (44a, 44b).

2. A fluid discriminator (42) as claimed in claim 1, wherein the structure (58) is exposed to the flow of the fluid composition (36) in at least first and second directions, and wherein the outlet flow path (46, 48) changes in response to a change in a proportion of the fluid composition (36) which flows in the first and second directions.

3. A fluid discriminator (42) as claimed in claim 1, wherein the structure (58) is more biased in a first direction by the flow of the fluid composition (36) more in the first direction, and wherein the structure (58) is more biased in a second direction by the flow of the fluid composition (36) more in the second direction.

4. A fluid discriminator (42) as claimed in claim 3, wherein the first direction is opposite to the second direction.

5. A fluid discriminator (42) as claimed in claim 3, wherein the first and second directions comprise at least one of the group including circumferential, axial, longitudinal, lateral, and radial directions.

6. A fluid discriminator (42) as claimed in claim 1, wherein the structure (58) is more biased in a first direction by the flow of the fluid composition (36) more through the first inlet flow path (44a), and wherein the structure (58) is more biased in a second direction by the flow of the fluid composition (36) more through the second inlet flow path (44b).

7. A fluid discriminator (42) as claimed in claim 1, wherein the structure (58) pivots, or rotates, and thereby changes the outlet flow path (46, 48), in response to a change in a proportion of the fluid composition (36) which flows through the first and second inlet flow paths (44a, 44b) .

8. A fluid discriminator (42) as claimed in claim 1, wherein the structure (58) rotates, and thereby changes the outlet flow path (46, 48), in response to a change in a ratio of desired to undesired fluids.

9. A fluid discrimination system (25) for use with a subterranean well (12), the system (25) comprising:
a fluid discriminator (42) according to claim 1, which selects through which of multiple outlet flow paths (46, 48) a fluid composition (36) flows, the selection being based on at least one direction of flow of the fluid composition (36) through the fluid discriminator (42), and the direction being dependent on at least one fluid type in the fluid composition (36),
wherein the at least one direction comprises first and second directions, and wherein the fluid discriminator (42) selects a first outlet flow path (46) in response to flow of the fluid composition (36) more in the first direction, and wherein the fluid discriminator (42) selects a second outlet flow path (48) in response to flow of the fluid composition (36) more in the second direction and wherein the flow of the fluid composition (36) in the first direction impinges on a structure (58), whereby the structure (58) displaces and the first outlet flow path (46) is selected.

10. A fluid discrimination system (25) as claimed in claim 9, in which the flow of the fluid composition (36) in the second direction impinges on the structure (58), whereby the structure (58) displaces and the second outlet flow path (48) is selected.

11. A fluid discrimination system (25) as claimed in claim 9, in which the structure (58) rotates in response to the impingement of the fluid composition (36) on the structure (58) .

12. A fluid discrimination system (42) as claimed in claim 9, in which a fluid switch (66) selects in which of the first and second directions the fluid composition (36) flows, wherein the fluid switch (66) directs the fluid composition (36) to flow more in the first direction in response to an increase in a ratio of desired to undesired fluid, and wherein the fluid switch (66) directs the fluid composition (36) to flow more in the second direction in response to a decrease in the ratio of desired to undesired fluid.

13. A fluid discrimination system (25) as claimed in claim 9, in which the first direction is radial or the second direction is rotational.

14. A method of discriminating between fluids flowed in a subterranean well (12), the method comprising:
providing a fluid discriminator (42) according to claim 1, which selects through which of multiple outlet flow paths (46, 48) a fluid composition (36) flows in the well (12), the selection being based on at least one direction of flow of the fluid composition (36) through the fluid discriminator (42), and the direction being dependent on a ratio of the fluids in the fluid composition (36), and
wherein the at least one direction comprises first and second directions, and wherein the fluid discriminator (42) selects a first outlet flow path (46) in response to flow of the fluid composition (36) more in the first direction, and wherein the fluid discriminator (42) selects a second outlet flow path (48) in response to flow of the fluid composition (36) more in the second direction.

15. A method as claimed in claim 14, wherein the flow of the fluid composition (36) in the first direction impinges on the structure (58), whereby the structure (58) displaces and the first outlet flow path (46) is selected.

16. A method as claimed in claim 15, wherein the flow of the fluid composition (36) in the second direction impinges on the structure (58), whereby the structure (58) displaces and the second outlet flow path (48) is selected.

17. A method as claimed in claim 15, wherein the flow of the fluid composition (36) in the second direction impinges on the structure (58), whereby the structure (58) rotates in response to the impingement of the fluid composition (36) on the structure (58).

18. A method as claimed in claim 14, wherein a fluid switch (66) selects in which of the first and second directions the fluid composition (46) flows, wherein the fluid switch (66) directs the fluid composition (36) to flow more in the first direction in response to an increase in the ratio of fluids, and wherein the fluid switch (66) directs the fluid composition (36) to flow more in the second direction in response to a decrease in the ratio of fluids.

19. A method as claimed in claim 14, wherein the first direction is radial.

20. A method as claimed in claim 14, wherein the second direction is rotational.

## Patentansprüche

1. Flüssigkeitsunterscheidungseinrichtung (42) zur Verwendung mit einer Tiefbohrung (12), die Flüssigkeitsunterscheidungseinrichtung (42) umfassend:
eine Struktur (58), die sich als Reaktion auf eine Flüssigkeitszusammensetzung (36) verschiebt, wodurch sich ein Austrittsströmungsweg (46, 48) eines Großteils der Flüssigkeitszusammensetzung (36) als Reaktion auf eine Änderung eines Flüssigkeitsverhältnisses in der Flüssigkeitszusammensetzung (36) ändert;
**dadurch gekennzeichnet, dass** der Flüssigkeitsunterscheidungseinrichtung (42) ferner einen Flüssigkeitsschalter (66) umfasst, der die Strömung der Flüssigkeitszusammensetzung (36) in mindestens einen ersten und zweiten Einlassströmungsweg (44a, 44b) lenkt, wobei der Flüssigkeitsschalter(66) eine Blockierungsvorrichtung (76) umfasst, welche die Strömung der Flüssigkeitszusammensetzung (36) mindestens zum Teil durch mindestens einen vom ersten und zweiten Einlassströmungsweg (44a, 44b) blockiert, und wobei ferner
der Flüssigkeitsschalter (66) die Strömung der Flüssigkeitszusammensetzung (36) in Richtung eines des ersten und zweiten Einlassströmungswegs (44a, 44b) als Reaktion darauf lenkt, dass die Blockierungsvorrichtung (76) zunehmend den anderen des ersten und zweiten Einlassströmungswegs (44a, 44b) blockiert.

2. Flüssigkeitsunterscheidungseinrichtung (42) nach Anspruch 1, wobei die Struktur (58) der Strömung der Flüssigkeitszusammensetzung (36) in mindestens die erste und zweite Richtung ausgesetzt ist, und wobei sich der Austrittsströmungsweg (46, 48) als Reaktion auf eine Änderung eines Teils der Flüssigkeitszusammensetzung (36) ändert, der in die erste und zweite Richtung strömt.

3. Flüssigkeitsunterscheidungseinrichtung (42) nach Anspruch 1, wobei die Struktur (58) mehr in eine erste Richtung durch die Strömung der Flüssigkeitszusammensetzung (36) mehr in die erste Richtung beeinflusst ist, und wobei die Struktur (58) mehr in eine zweite Richtung durch die Strömung der Flüssigkeitszusammensetzung (36) mehr in die zweite Richtung beeinflusst ist.

4. Flüssigkeitsunterscheidungseinrichtung (42) nach Anspruch 3, wobei die erste Richtung der zweiten Richtung entgegengesetzt ist.

5. Flüssigkeitsunterscheidungseinrichtung (42) nach Anspruch 3, wobei die erste und zweite Richtung mindestens eine der Gruppe umfassen, die umlaufend, axial, längsverlaufend, querverlaufend und radiale Richtungen beinhaltet.

6. Flüssigkeitsunterscheidungseinrichtung (42) nach Anspruch 1, wobei die Struktur (58) mehr in eine erste Richtung durch die Strömung der Flüssigkeitszusammensetzung (36) mehr durch den ersten Einlassströmungsweg (44a) beeinflusst ist, und wobei die Struktur (58) mehr in eine zweite Richtung durch die Strömung der Flüssigkeitszusammensetzung (36) mehr durch den zweiten Einlassströmungsweg (44b) beeinflusst ist.

7. Flüssigkeitsunterscheidungseinrichtung (42) nach Anspruch 1, wobei die Struktur (58) schwenkt oder sich dreht, und dadurch den Austrittsströmungsweg (46, 48) als Reaktion auf eine Änderung des Anteils der Flüssigkeitszusammensetzung (36) ändert, der durch den ersten und zweiten Einlassströmungsweg (44a, 44b) strömt.

8. Flüssigkeitsunterscheidungseinrichtung (42) nach Anspruch 1, wobei die Struktur (58) sich dreht, und dadurch den Austrittsströmungsweg (46, 48) als Reaktion auf eine Änderung des Anteils eines Verhältnisses von gewünschten und nicht gewünschten Flüssigkeiten ändert.

9. Flüssigkeitsunterscheidungssystem(25) zur Verwendung bei einer unterirdischen Bohrung (12), das System (25) Folgendes umfassend:
eine Flüssigkeitsunterscheidungseinrichtung (42) nach Anspruch 1, die auswählt, durch welchen von mehreren Austrittsströmungswegen (46, 48) eine Flüssigkeitszusammensetzung (36) strömt, wobei die Auswahl auf mindestens einer Strömungsrichtung der Flüssigkeitszusammensetzung (36) durch die Flüssigkeitsunterscheidungseinrichtung (42) basiert, und die Richtung von mindestens einer Flüssigkeitsart in der Flüssigkeitszusammensetzung (36) abhängt,
wobei die mindestens eine Richtung die erste und zweite Richtung umfasst, und wobei die Flüssigkeitsunterscheidungseinrichtung (42) einen ersten Austrittsströmungsweg (46) als Reaktion auf Strömung der Flüssigkeitszusammensetzung (36) mehr in die erste Richtung auswählt, und wobei die Flüssigkeitsunterscheidungseinrichtung (42) einen zweiten Austrittsströmungsweg (48) als Reaktion auf Strömung der Flüssigkeitszusammensetzung (36) mehr in die zweite Richtung auswählt und wobei die Strömung der Flüssigkeitszusammensetzung (36) in die erste Richtung auf eine Struktur (58) einwirkt, wodurch die Struktur (58) beeinflusst wird und der erste Austrittsströmungsweg (46) ausgewählt wird.

10. Flüssigkeitsunterscheidungssystem (25) nach Anspruch 9, bei dem die Strömung der Flüssigkeitszusammensetzung (36) in die zweite Richtung auf die Struktur (58) einwirkt, wodurch die Struktur (58) beeinflusst wird und der zweite Austrittsströmungsweg (48) ausgewählt wird.

11. Flüssigkeitsunterscheidungssystem (25) nach Anspruch 9, bei dem sich die Struktur (58) als Reaktion auf das Einwirken der Flüssigkeitszusammensetzung (36) auf die Struktur (58) dreht.

12. Flüssigkeitsunterscheidungssystem (42) nach Anspruch 9, bei dem ein Flüssigkeitsschalter(66) auswählt, in welche der ersten und zweiten Richtung die Flüssigkeitszusammensetzung (36) strömt, wobei der Flüssigkeitsschalter (66) die Flüssigkeitszusammensetzung (36) lenkt, mehr in die erste Richtung als Reaktion auf eine Erhöhung eines Verhältnisses von gewünschter zu nicht gewünschter Flüssigkeit zu strömen, und wobei der Flüssigkeitsschalter (66) die Flüssigkeitszusammensetzung (36) lenkt, mehr in die zweite Richtung als Reaktion auf eine Abnahme des Verhältnisses von gewünschter zu nicht gewünschter Flüssigkeit zu strömen.

13. Flüssigkeitsunterscheidungssystem (25) nach Anspruch 9, bei dem die erste Richtung radial ist oder sich die zweite Richtung dreht.

14. Verfahren zum Unterscheiden zwischen Flüssigkeiten, die in eine unterirdische Bohrung (12) geströmt werden, das Verfahren umfassend:
das Bereitstellen einer Flüssigkeitsunterscheidungseinrichtung (42) nach Anspruch 1, die auswählt, durch welchen von mehreren Austrittsströmungswegen (46, 48) eine Flüssigkeitszusammensetzung (36) in die Bohrung (12) strömt, wobei die Auswahl auf mindestens einer Strömungsrichtung der Flüssigkeitszusammensetzung (36) durch die Flüssigkeitsunterscheidungseinrichtung (42) basiert, und die Richtung von mindestens einem Flüssigkeitsverhältnis in der Flüssigkeitszusammensetzung (36) abhängt, und
wobei die mindestens eine Richtung die erste und zweite Richtung umfasst, und wobei die Flüssigkeitsunterscheidungseinrichtung (42) einen ersten Austrittsströmungsweg (46) als Reaktion auf Strömung der Flüssigkeitszusammensetzung (36) mehr in die erste Richtung auswählt, und wobei die Flüssigkeitsunterscheidungseinrichtung (42) einen zweiten Austrittsströmungsweg (48) als Reaktion auf Strömung der Flüssigkeitszusammensetzung (36) mehr in die zweite Richtung auswählt.

15. Verfahren nach Anspruch 14, wobei die Strömung der Flüssigkeitszusammensetzung (36) in die erste Richtung auf die Struktur (58) einwirkt, wodurch die Struktur (58) beeinflusst wird und der erste Austrittsströmungsweg (46) ausgewählt wird.

16. Verfahren nach Anspruch 15, wobei die Strömung der Flüssigkeitszusammensetzung (36) in die zweite Richtung auf die Struktur (58) einwirkt, wodurch die Struktur (58) beeinflusst wird und der zweite Austrittsströmungsweg (48) ausgewählt wird.

17. Verfahren nach Anspruch 15, wobei die Strömung der Flüssigkeitszusammensetzung (36) in die zweite Richtung auf die Struktur (58) einwirkt, wodurch sich die Struktur (58) als Reaktion auf das Einwirken der Flüssigkeitszusammensetzung (36) auf die Struktur (58) dreht.

18. Verfahren nach Anspruch 14, wobei ein Flüssigkeitsschalter(66) auswählt, in welche der ersten und zweiten Richtung die Flüssigkeitszusammensetzung (46) strömt, wobei der Flüssigkeitsschalter (66) die Flüssigkeitszusammensetzung (36) lenkt, mehr in die erste Richtung als Reaktion auf eine Erhöhung eines Flüssigkeitsverhältnisses zu strömen, und wobei der Flüssigkeitsschalter (66) die Flüssigkeitszusammensetzung (36) lenkt, mehr in die zweite Richtung als Reaktion auf eine Abnahme des Flüssigkeitsverhältnisses zu strömen.

19. Verfahren nach Anspruch 14, wobei die erste Richtung radial ist.

20. Verfahren nach Anspruch 14, wobei sich die zweite Richtung dreht.

## Revendications

1. Discriminateur de fluide (42) à mettre en œuvre dans un puits souterrain (12), le discriminateur de fluide (42) comprenant :
une structure (58) qui se déplace en réponse à un écoulement d'une composition de fluide (36), moyennant quoi un chemin d'écoulement de sortie (46, 48) d'une majorité de la composition de fluide (36) change en réponse à un changement d'un rapport de fluides dans la composition de fluide (36) ;
**caractérisé en ce que** le discriminateur de fluide (42) comprend en outre un commutateur de fluide (66) qui dirige l'écoulement de la composition de fluide (36) vers au moins des premier et second chemins d'écoulement d'entrée (44a, 44b) dans lequel le commutateur de fluide (66) comprend un dispositif de blocage (76) qui bloque au moins partiellement l'écoulement de la composition de fluide (36) à travers au moins l'un des premier et second chemins d'écoulement d'entrée (44a, 44b), et en outre dans lequel
le commutateur de fluide (66) dirige l'écoulement de la composition de fluide (36) vers l'un des premier et second chemins d'écoulement d'entrée (44a, 44b) en réponse au dispositif de blocage (76) bloquant de plus en plus l'autre des premier et second chemins d'écoulement d'entrée (44a, 44b).

2. Discriminateur de fluide (42) selon la revendication 1, dans lequel la structure (58) est exposée à l'écoulement de la composition de fluide (36) dans au moins des première et seconde directions, et dans lequel le chemin d'écoulement de sortie (46, 48) change en réponse à un changement dans une proportion de la composition de fluide (36) qui s'écoule dans les première et seconde directions.

3. Discriminateur de fluide (42) selon la revendication 1, dans lequel la structure (58) est davantage sollicitée dans une première direction par l'écoulement de la composition de fluide (36) davantage dans la première direction, et dans lequel la structure (58) est davantage sollicitée dans une seconde direction par l'écoulement de la composition de fluide (36) davantage dans la seconde direction.

4. Discriminateur de fluide (42) selon la revendication 3, dans lequel la première direction est opposée à la seconde direction.

5. Discriminateur de fluide (42) selon la revendication 3, dans lequel les première et seconde directions comprennent au moins l'une du groupe comportant des directions circonférentielle, axiale, longitudinale, latérale et radiale.

6. Discriminateur de fluide (42) selon la revendication 1, dans lequel la structure (58) est davantage sollicitée dans une première direction par l'écoulement de la composition de fluide (36) davantage à travers le premier chemin d'écoulement d'entrée (44a), et dans lequel la structure (58) est davantage sollicitée dans une seconde direction par l'écoulement de la composition de fluide (36) davantage à travers le second chemin d'écoulement d'entrée (44b).

7. Discriminateur de fluide (42) selon la revendication 1, dans lequel la structure (58) pivote, ou tourne, et change ainsi le chemin d'écoulement de sortie (46, 48), en réponse à un changement dans une proportion de la composition de fluide (36) qui s'écoule à travers les premier et second chemins d'écoulement d'entrée (44a, 44b).

8. Discriminateur de fluide (42) selon la revendication 1, dans lequel la structure (58) tourne et change ainsi le chemin d'écoulement de sortie (46, 48), en réponse à un changement d'un rapport entre les fluides souhaités et non souhaités.

9. Système de discrimination de fluide (25) à mettre en œuvre dans un puits souterrain (12), le système (25) comprenant :
un discriminateur de fluide (42) selon la revendication 1, qui sélectionne à travers lequel des multiples chemins d'écoulement de sortie (46, 48) une composition de fluide (36) s'écoule, la sélection étant basée sur au moins une direction d'écoulement de la composition de fluide (36) à travers le discriminateur de fluide (42), et la direction dépendant d'au moins un type de fluide dans la composition de fluide (36),
dans lequel l'au moins une direction comprend des première et seconde directions, et dans lequel le discriminateur de fluide (42) sélectionne un premier chemin d'écoulement de sortie (46) en réponse à l'écoulement de la composition de fluide (36) davantage dans la première direction, et dans lequel le discriminateur de fluide (42) sélectionne un second chemin d'écoulement de sortie (48) en réponse à l'écoulement de la composition de fluide (36) davantage dans la seconde direction et dans lequel l'écoulement de la composition de fluide (36) dans la première direction heurte une structure (58), moyennant quoi la structure (58) se déplace et le premier chemin d'écoulement de sortie (46) est sélectionné.

10. Système de discrimination de fluide (25) selon la revendication 9, dans lequel l'écoulement de la composition de fluide (36) dans la seconde direction heurte la structure (58), moyennant quoi la structure (58) se déplace et le second chemin d'écoulement de sortie (48) est sélectionné.

11. Système de discrimination de fluide (25) selon la revendication 9, dans lequel la structure (58) tourne en réponse à l'impact de la composition de fluide (36) sur la structure (58) .

12. Système de discrimination de fluide (42) selon la revendication 9, dans lequel un commutateur de fluide (66) sélectionne dans laquelle des première et seconde directions la composition de fluide (36) s'écoule, dans lequel le commutateur de fluide (66) dirige la composition de fluide (36) pour qu'elle s'écoule davantage dans la première direction en réponse à une augmentation d'un rapport entre le fluide souhaité et non souhaité, et dans lequel le commutateur de fluide (66) dirige la composition de fluide (36) pour qu'elle s'écoule davantage dans la seconde direction en réponse à une diminution du rapport entre le fluide souhaité et non souhaité.

13. Système de discrimination de fluide (25) selon la revendication 9, dans lequel la première direction est radiale ou la seconde direction est rotative.

14. Procédé de discrimination entre des fluides s'écoulant dans un puits souterrain (12), le procédé comprenant :
la fourniture d'un discriminateur de fluide (42) selon la revendication 1, qui sélectionne à travers lequel des multiples chemins d'écoulement de sortie (46, 48) une composition de fluide (36) s'écoule dans le puits (12), la sélection étant basée sur au moins une direction d'écoulement de la composition de fluide (36) à travers le discriminateur de fluide (42), et la direction dépendant d'un rapport des fluides dans la composition de fluide (36), et
dans lequel l'au moins une direction comprend des première et seconde directions, et dans lequel le discriminateur de fluide (42) sélectionne un premier chemin d'écoulement de sortie (46) en réponse à l'écoulement de la composition de fluide (36) davantage dans la première direction, et dans lequel le discriminateur de fluide (42) sélectionne un second chemin d'écoulement de sortie (48) en réponse à l'écoulement de la composition de fluide (36) davantage dans la seconde direction.

15. Procédé selon la revendication 14, dans lequel l'écoulement de la composition de fluide (36) dans la première direction heurte la structure (58), moyennant quoi la structure (58) se déplace et le premier chemin d'écoulement de sortie (46) est sélectionné.

16. Procédé selon la revendication 15, dans lequel l'écoulement de la composition de fluide (36) dans la seconde direction heurte la structure (58), moyennant quoi la structure (58) se déplace et le second chemin d'écoulement de sortie (48) est sélectionné.

17. Procédé selon la revendication 15, dans lequel l'écoulement de la composition de fluide (36) dans la seconde direction heurte la structure (58), moyennant quoi la structure (58) tourne en réponse à l'impact de la composition de fluide (36) sur la structure (58).

18. Procédé selon la revendication 14, dans lequel un commutateur de fluide (66) sélectionne dans laquelle des première et seconde directions la composition de fluide (46) s'écoule, dans lequel le commutateur de fluide (66) dirige la composition de fluide (36) pour qu'elle s'écoule davantage dans la première direction en réponse à une augmentation d'un rapport des fluides, et dans lequel le commutateur de fluide (66) dirige la composition de fluide (36) pour qu'elle s'écoule davantage dans la seconde direction en réponse à une diminution du rapport des fluides.

19. Procédé selon la revendication 14, dans lequel la première direction est radiale.

20. Procédé selon la revendication 14, dans lequel la seconde direction est rotative.
